# EUROPEAN PATENT SPECIFICATION

(11) **EP 2 121 529 B1**
(45) Date of publication and mention of the grant of the patent: **14.11.2012**
(21) Application number: 08702402.2
(22) Date of filing: 11.01.2008
(51) Int. Cl.: C03B 7/08, C03B 7/14, C03B 7/16, C03B 9/44

(54) **INDIVIDUAL SECTION FEEDING AND DELIVERY PROCESS**
IS-SPEISE- UND -ZUFÜHRVERFAHREN
PROCÉDÉ D'ALIMENTATION ET DE DISTRIBUTION POUR MACHINE SECTIONNELLE

(30) Priority: 11.01.2007 EP 07100438
(43) Date of publication of application: 25.11.2009
(73) Proprietor: Mobayed, Carlo, 6300 Zug (CH)
(72) Inventor: Mobayed, Carlo, 6300 Zug (CH)
(74) Representative: Grosfillier, Philippe
(86) International application number: PCT/IB2008/050098
(87) International publication number: WO 2008/084458

(56) References cited:
- EP-A- 0 873 975
- FR-A- 1 371 073
- FR-A- 2 880 342
- GB-A- 2 209 320
- US-A- 3 305 342
- US-A1- 2005 107 907

## Description

### Field of the invention

The invention relates to a new layout of an I.S. (individual Section) Machine for forming glass containers, such as bottles, and method of operating it.

### Prior art

The technology of using molten glass to form containers, such as bottles has been known for a very long time. An example of a publication relating to a glass blowing machine and method is US patent 1,843,160 . This is one of the basic patent and publication relating to this field and is well known in the field.

A most widely used forming machine arrangement is called *"individual section"* machine (or IS machine), was developed in the years 1920-1930. This type of machine is arranged today as a bank of 4-12 identical sections, each of which contains one complete set of mechanisms to be able to make containers. The section are lined up in a row, and the gobs feed into each section via a moving chute, called the *gob distributor.* Sections are engineered to make either one, two, three or four containers at once. (Referred to as *single, double, triple* and *quad* gob respectively), In the case of multiple gobs, the *shears* cut the gobs simultaneously, and they fall into blank molds in parallel.

Known forming processes that have been developed over the years include the following processes: "Blow and Blow", "Press & Blow", and "Narrow Neck Press and Blow (NNPB)".

The present application relates more specifically to the most commonly used process that is used today for forming glass containers and known as the "IS Machine" using the principle of "Blow and Blow" or "Press and Blow" or "Narrow Neck Press and Blow (NNPB)". In this process gobs of molten glass are brought into a first mold by a distributor and delivery system. The forming process begins by blowing thus forming an upside-down parison (meaning a partially formed container) which is then inverted during transfer from the first mold into a right-side up position into a blow mold where the parison is blown into shape while the next parison is being formed in the first mold.

The finished product is then removed by a take-out mechanism, further cooled on a deadplate and then discharged by a pusher on a conveyor. A typical example of such a machine is given by the "EMHART FLEX-LINE system" sold by the Emhart company.

There are many other publications, for example patent applications and patents, that relate to the field of glass forming machines and methods: US 4,070,174, US 4, 009,018 or US 4,010,021, illustrate such production machines.

EP 0 873 975 discloses a process of producing containers including means for determining glass gob arrival timing at each machine section.

FR 2 880 342 concerns a process of producing at least two products of different dimension and/or configuration in moldable thermoplastic materials, in particular glass, by using an IS machine.

US 200510107907 provides a method for controlling a glass forming machine implemented as an IS machine.

GB 2 209 320 discloses a take-out mechanism for a glass container forming machine, this mechanism comprising first and second container gripping means and independently operable moving means thereof.

US 3,305,342 relates to an apparatus and method for handling articles of glassware from a forming machine and annealing or heat treating same with a minimum of handling both at an increased production rate.

Today in the known machines, the sections operate individually but in interdependence of each other as they make use of common mechanical elements. Due to dependency among sections, the operation of a given section is at times idle, as it waits for another section to deliver bottles.

The common mechanical elements that are currently used by the sections are mainly the following:
1) A feeder feeds glass from a forehearth into the orifices of a spout. A shear mechanism then cuts glass into pieces known as gobs.
2) A gob distributor is mounted onto a beam and distribute the gobs into a delivery system.
3) The beam mounted on uprights carry the gob distributor and the delivery system.
4) The delivery system comprises scoops, deflectors and troughs, delivers the gobs into the sections.
5) A machine bed that delivers pressurized air into the sections. The machine bed ensures that all sections are aligned with each other, all supplied with pressurized air, used to form and cool the glass.
6) A conveyor that transports the formed glass containers out of the sections onto a transfer wheel or directly onto a stacker if the cooling oven is arranged 90° to the conveyor.
7) A transfer wheel that deviates the transported glass containers onto a cross conveyor to the stacker
8) A stacker that stacks the containers into a cooling oven.

The implications and consequences of depending on common mechanical elements are as follows,
1) If the feeder stops operating, so must all sections of the I.S. Machine,
2) The feeder must perform at a speed that is high enough to supply all sections in a timely and synchronized manner,
3) If the gob distributor stops operating, so must all sections of the I.S. machine,
4) The gob distributor must perform at a speed that is high enough to supply all sections in a timely and synchronized manner,
5) As the delivery system uses gravity to deliver gobs into the sections, a minimum height of the beam is required in order to muster enough dropping speed for the gobs into the outer sections of the machine.
6) All sections depend on the same, single conveyor to receive the glass containers formed within the sections.
7) All sections depend on the same, single transfer wheel to deviate containers for stacking.
8) All sections depend on the same, single stacker.

The eight common elements described above constitute a bottleneck in terms of the I.S. Machine speed performance and how much glass containers an I.S. machine can be produced.

### Principle of the invention

The individual sections that make up an I.S. Machine are rendered more independent as they no longer share common mechanisms such as the machine conveyor and ware transfer.

In the layout according to the invention, each section, or two adjacent sections have their own feeder, gob delivery system, center distance configuration and conveyor. The synchronization of the I.S. Machine operation across all the sections that make up the machine is no longer required. Synchronization is needed at most among two adjacent sections only.

The invention allows individual sections or two adjacent sections that make up one I.S. machine to produce its unique assortment of different glass container weights, shapes or sizes. As the individual sections that make up one I.S. machine no longer share a common machine bed, each section, or two adjacent sections can be shut down, removed and replaced while the remaining sections of the machine are operating.

Accordingly, the object of this invention is to eliminate the reliance those common elements by:
1) Feeding glass independently and individually into each section, or two adjacent sections
2) Eliminating the gob distributor if two adjacent sections are not used.
3) Reduce the delivery system to a one-dimensional (or two-dimensional, in case of two adjacent sections), vertical direction, dropping the gob into each cavity
4) Reduce the delivery system in height as the minimal gob dropping angle to the outer sections is no longer required
5) Providing individual conveyors for each section, or two adjacent sections, that operate independently
6) Eliminate the need for a transfer wheel as the glass from the conveyors goes directly into the cooling oven
7) Eliminate the need for a stacker as the glass from the conveyors goes directly into the cooling oven
8) Eliminate the need for a common machine bed.

The following elements are included in this invention:
1) Each section, or two adjacent sections, has a Feeder and Delivery that is centered with its blank molds.
2) Each section, or two adjacent sections, can be electronically programmed to run independently without any need to synchronize its speed with the other sections

The implications and advantages of the present invention are,
1) A multiplication of feeding devices to one feeder per section, or two adjacent sections
2) Shorter and simpler delivery trajectory of glass into the blank mold of the section
3) Simplified gob loading into the blank
4) More cooling capacity per section as sections can be mounted loose form each other. Reduced heat impact of neighbor sections.
5) Faster transportation of glass containers into the cooling oven due to the elimination of the Transfer Wheel.
6) Easier access to the section frame and the section frame mechanisms.

### Brief description of the figures

The present invention will be better understood by the description of several embodiments and of the attached figures in which
Figure 1 illustrates a first embodiment of a layout of individual sections with feeders for each section, without gob distributor;
Figure 2 illustrates a second embodiment of layout with two adjacent sections with feeders for each section, without gob distributor
Figure 3 illustrates a third embodiment with two adjacent sections Layout with one feeder for two sections, without gob distributor. A Shear Mechanism for each section.
Figure 4 illustrates a fourth embodiment with two adjacent sections Layout with one feeder for two sections, with gob distributor. One Shear mechanism for two sections.

### Detailed description of the invention

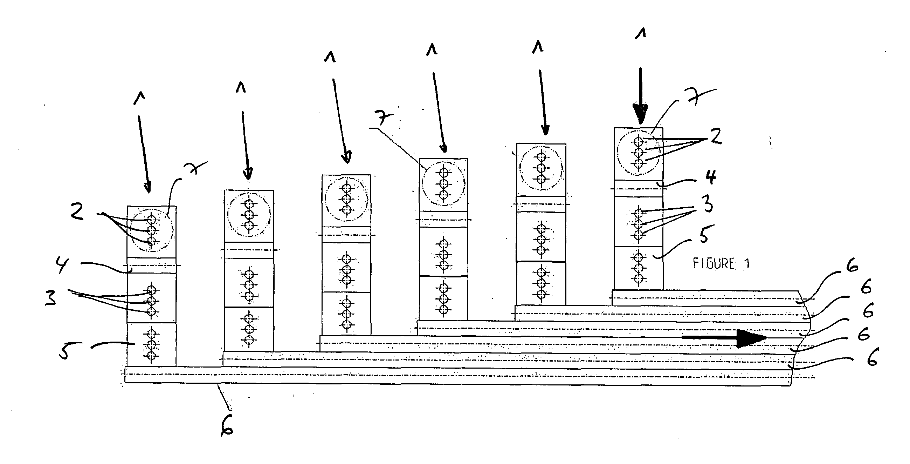

In figure 1, a first embodiment of the layout of the invention is illustrated. In this embodiment, on has represented six successive individual preferably identical sections 1. Each section 1 comprises two series of three molds 2, 3, the first series of three molds 2 being used for forming three parisons simultaneously, and the second set of molds 3 being used to form three containers simultaneously, as in the "Blow and Blow" process mentioned above. Of course, other processes may be used in the layout of the invention. Also, although series of three molds are represented, it is also possible to use one single mold per serie, or two or even more (like four) to prepare one or more containers simultaneously.

Between two series of molds 2, 3 one has schematically illustrated at 4 the inversion mechanism that allows to transports the formed parisons (which is prepared in an upside down position, see above the description of the "Blow and Blow" process) from the first series of molds 2 to the second series of molds 3.

Next to the second series of molds 3, there is illustrated the deadplate 5 on which the formed containers are placed when leaving the molds 3 and before they are shifted on the conveyor 6.

Also represented in figure 1 are the feeder spouts 7 on top of the first series of molds 2 for the feeding of molten glass into said molds 2.

As one can understand from this first figure, all sections 1 are independent (also on the feed side and on the discharge side) so that any problem or malfunction of one section 1 will not impact on the overall functioning of the system, contrarily to the actually known layouts and methods. One section (or more) can be stopped, exchanged, repaired or under maintenance while the others are still fully working.

Accordingly, for example, it is also possible to change the type of containers (i.e. their shape) while the system is working. The run to fabricate a type of containers could be further processed on all section 1 but one, which is exchanged to bring the new molds into production. Once this is done, the same operation is carried out with the neighboring section 1 and the run of new containers can be started with the first section already exchanged, still having the other sections producing the "old" container. Such exchange is done in succession for each section 1 until all are producing the "new" container. With the layout of the present invention, there is no need to stop the machine and the change can be made without stopping the production of "old" containers.

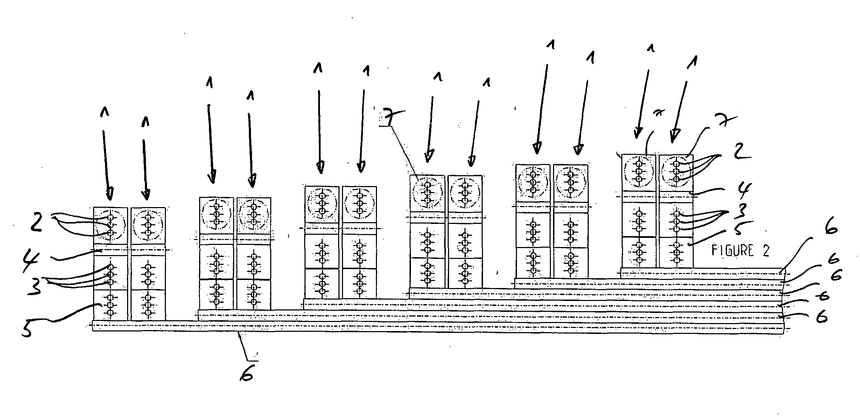

Figure 2 illustrates a second embodiment of the invention. In this embodiment, the sections 1 (which are in their principle similar to the sections of figure 1) are arranged by pairs (forming a production unit) and the reference numbers used are the same as in figure 1. In addition, each section 1 has its own feeder spout 7.

This layout allows a higher production of containers per production unit than the layout of figure 1.

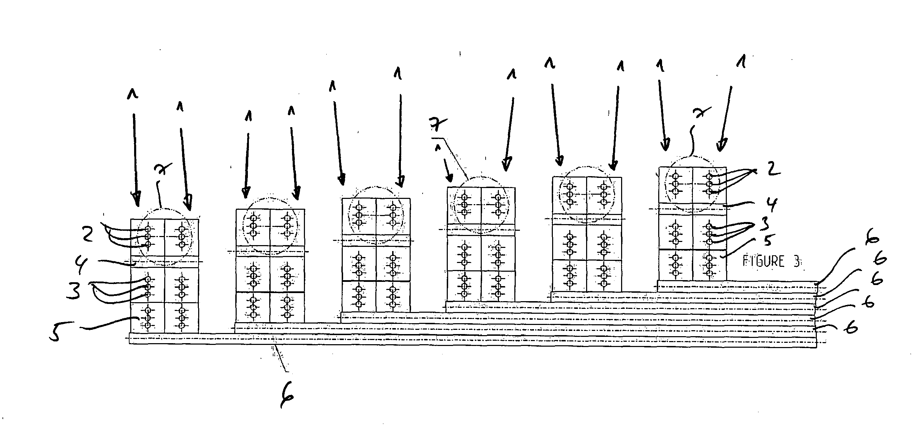

Figure 3 illustrates a third embodiment of the invention. In this embodiment, each production unit also comprises two sections 1 (as in figure 2) but the difference resides in the fact that each pair of sections has only one feeder spout 7. In this embodiment, there is also one shear mechanism for each section 1.

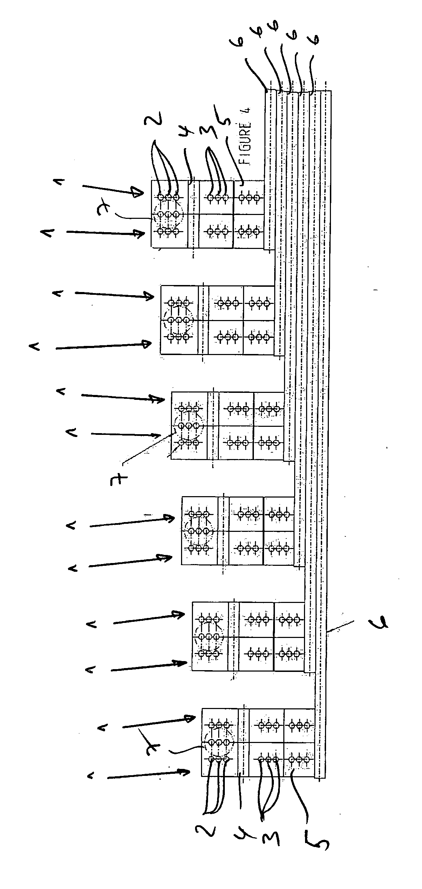

Figure 4 illustrates a fourth embodiment in which the sections 1 are arranged by pairs, with one feeder spout 7 per pair of sections 1 but only one shear mechanism per pair of sections (production unit).

Of course, the embodiments given in the present specification are non limitative illustrative examples and equivalent means are possible. In addition, the number of molds per section 1 can be changed, even between neighboring sections 1. When the sections 1 are together by pairs (as in figures 2-4), then preferably the number of molds are the same in a given pair.

## Claims

1. A process of producing containers made of molten glass using an Individual Section machine with at least a feeding spout, a plurality of sections (1) comprising molds (2, 3) for forming the containers and a conveyor for transporting the formed containers, wherein each section (1) operates in a independent manner with its own feeder spout (7), gob delivery system, center distance configuration and conveyor (6) to allow an independent production of containers by each section (1).

2. A process as defined in claim 1, wherein the number of molds (2, 3) is equal in each section (1).

3. A process as defined in claim 1, wherein the number of molds (2, 3) is not equal in different sections (1).

4. A process as defined in one of the preceding claims, wherein the shapes of the molds (2, 3) are different in different sections (1).

5. A process as defined in one of the preceding claims, wherein the sections (1) work by pairs forming production units.

6. A process as defined in claim 5, wherein sections (1) that work in pair have the same number of molds (2, 3).

7. A process as defined in claim 5 or 6, wherein sections (1) that work in pair have molds (2, 3) having the same shape.

8. A process according to one of the preceding claims wherein each section (1) or two adjacent sections (1) operate their own conveyor (6).

9. A machine carrying out the process as defined in one of the preceding claims.

## Patentansprüche

1. Verfahren zur Herstellung von Behältern, die aus flüssigem Glas hergestellt werden, unter Verwendung einer Individual-Section-Maschine mit mindestens einem Speisestutzen, mehreren Sektionen (1), die Formen (2, 3) zum Bilden der Behälter umfassen, und einer Fördereinrichtung zum Transportieren der gebildeten Behälter, wobei jede Sektion (1) auf unabhängige Weise mit ihrem eigenen Speisestutzen (7), ihrem eigenen Tropfenzuführsystem, ihrer eigenen Achsabstandskonfiguration und ihrer eigenen Fördereinrichtung (6) arbeitet, um eine unabhängige Herstellung von Behältern durch jede Sektion (1) zu ermöglichen.

2. Verfahren nach Anspruch 1, wobei die Anzahl von Formen (2, 3) in jeder Sektion (1) gleich ist.

3. Verfahren nach Anspruch 1, wobei die Anzahl von Formen (2, 3) in verschiedenen Sektionen (1) nicht gleich ist.

4. Verfahren nach einem der vorhergehenden Ansprüche, wobei die Umrisse der Formen (2, 3) in verschiedenen Sektionen (1) unterschiedlich sind.

5. Verfahren nach einem der vorhergehenden Ansprüche, wobei die Sektionen (1) paarweise arbeiten, wodurch Produktionseinheiten gebildet werden.

6. Verfahren nach Anspruch 5, wobei Sektionen (1), die paarweise arbeiten, dieselbe Anzahl von Formen (2, 3) aufweisen.

7. Verfahren nach Anspruch 5 oder 6, wobei Sektionen (1), die paarweise arbeiten, Formen (2, 3) mit denselben Umrissen aufweisen.

8. Verfahren nach einem der vorhergehenden Ansprüche, wobei jede Sektion (1) oder zwei benachbarte Sektionen (1) ihre eigene Fördereinrichtung (6) betreiben.

9. Maschine, die das Verfahren nach einem der vorhergehenden Ansprüche durchführt.

## Revendications

1. Procédé de production de récipients constitués de verre fondu par recours à une machine à sections individuelles dotée d'au moins une tuyère d'alimentation, de plusieurs sections (1) comprenant des moules (2, 3) de moulage des récipients et d'un transporteur qui transporte les récipients moulés, chaque section (1) travaillant de façon indépendante avec sa propre tuyère d'alimentation (7), son propre système de fourniture de paraison, sa propre configuration de distance par rapport au centre et son propre transporteur (6) de manière à permettre à chaque section (1) de produire des récipients indépendamment les uns des autres.

2. Procédé selon la revendication 1, dans lequel chaque section (1) présente le même nombre de moules (2, 3).

3. Procédé selon la revendication 1, dans lequel différentes sections (1) ne présentent pas le même nombre de moules (2, 3).

4. Procédé selon l'une des revendications précédentes, dans lequel les différentes sections (1) présentent des moules (2, 3) de formes différentes.

5. Procédé selon l'une des revendications précédentes, dans lequel les sections (1) travaillent par paires qui forment des unités de production.

6. Procédé selon la revendication 5, dans lequel les sections (1) qui travaillent en paire présentent le même nombre de moules (2, 3).

7. Procédé selon les revendications 5 ou 6, dans lequel les sections (1) qui travaillent en paire ont des moules (2, 3) de mêmes formes.

8. Procédé selon l'une des revendications précédentes, dans lequel chaque section (1) ou deux sections adjacentes (1) utilisent leur propre transporteur (6).

9. Machine exécutant le procédé selon l'une des revendications précédentes.
